(19) **Europäisches Patentamt**
**European Patent Office**
**Office européen des brevets**

(11) **EP 4 682 193 A1**

(12) **EUROPEAN PATENT APPLICATION**
published in accordance with Art. 153(4) EPC

(43) Date of publication:
**21.01.2026   Bulletin 2026/04**

(51) International Patent Classification (IPC):
*C08J 9/04* (2006.01)        *H01B 7/02* (2006.01)
*H01B 13/14* (2006.01)

(21) Application number: 25778003.1

(22) Date of filing: 04.03.2025

(52) Cooperative Patent Classification (CPC):
C08J 9/04; H01B 7/02; H01B 13/14

(86) International application number:
**PCT/JP2025/007783**

(87) International publication number:
**WO 2025/204595 (02.10.2025 Gazette 2025/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   28.03.2024   JP 2024053184

(71) Applicant: **Daikin Industries, Ltd.**
**Osaka-shi, Osaka 530-0001 (JP)**

(72) Inventors:
• **ISHII, Kenji**
**Osaka-Shi, Osaka 530-0001 (JP)**

• **TOKUDA, Masato**
**Osaka-Shi, Osaka 530-0001 (JP)**
• **MUKAE, Hirofumi**
**Osaka-Shi, Osaka 530-0001 (JP)**
• **KOMORI, Masaji**
**Osaka-Shi, Osaka 530-0001 (JP)**
• **YAMAUCHI, Akiyoshi**
**Osaka-Shi, Osaka 530-0001 (JP)**
• **KISHIKAWA, Yosuke**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **RESIN COMPOSITION FOR FOAM MOLDING, FOAM MOLDED BODY, METHOD FOR PRODUCING FOAM MOLDED BODY, FOAM ELECTRICAL WIRE, AND METHOD FOR PRODUCING FOAM ELECTRICAL WIRE**

(57)    The disclosure aims to provide a foam molding resin composition capable of forming sufficiently fine cells and providing a good appearance, a foam-molded article, a method for producing a foam-molded article, a foam electric wire, and a method for producing a foam electric wire. The disclosure relates to a foam molding resin composition containing a fluororesin (A) and a cyclic tetrapyrrole compound (B).

EP 4 682 193 A1

## Description

### TECHNICAL FIELD

The disclosure relates to foam molding resin compositions, foam-molded articles, methods for producing foam-molded articles, foam electric wires, and methods for producing foam electric wires.

### BACKGROUND ART

Fluororesin has excellent heat resistance and chemical resistance and thus is widely used for various purposes.

Foam molding is a known technique to achieve weight reduction and improve electric properties of fluororesin. The foam molding is capable of forming fine cells by adding a substance that forms a foam nucleus (foam nucleating agent).

Foam nucleating agents for fluororesin are limited due to high molding temperatures of fluororesin, and boron nitride is generally used (see Patent Literatures 1 to 3).

### CITATION LIST

- Patent Literature

Patent Literature 1: JP H10-045931 A
Patent Literature 2: JP 2022-028640 A
Patent Literature 3: JP 2005-206745 A

### SUMMARY OF INVENTION

- Technical Problem

However, boron nitride is unable to refine cells sufficiently. There has been room for improvement in this respect.

Patent Literature 1 discloses a method for refining cells by mixing salts of perfluoroalkyl sulfonic acid with boron nitride. However, the use of fluorine-based surfactants such as perfluoroalkyl sulfonic acid leads to the plasticization of the molten resin during molding, which may cause sparks and thus spoil the appearance. There has been room for improvement in this respect.

The disclosure aims to provide a foam molding resin composition capable of forming sufficiently fine cells and providing a good appearance, a foam-molded article, a method for producing a foam-molded article, a foam electric wire, and a method for producing a foam electric wire.

- Solution to Problem

The disclosure (1) relates to a foam molding resin composition containing a fluororesin (A) and a cyclic tetrapyrrole compound (B).

The disclosure (2) relates to the foam molding resin composition according to the disclosure (1), wherein the fluororesin (A) is a melt-moldable fluororesin.

The disclosure (3) relates to the foam molding resin composition according to the disclosure (1) or (2), wherein the fluororesin (A) includes at least one selected from the group consisting of a tetrafluoroethylene/hexafluoropropylene copolymer and a tetrafluoroethylene/perfluoro(alkyl vinyl ether) copolymer.

The disclosure (4) relates to the foam molding resin composition according to any one of the disclosures (1) to (3), wherein the fluororesin (A) is a tetrafluoroethylene/hexafluoropropylene copolymer.

The disclosure (5) relates to the foam molding resin composition according to any one of the disclosures (1) to (4), wherein the fluororesin (A) is fluorinated.

The disclosure (6) relates to the foam molding resin composition according to any one of the disclosures (1) to (5), wherein the foam molding resin composition contains 80 to 99.99% by mass of the fluororesin (A).

The disclosure (7) relates to the foam molding resin composition according to any one of the disclosures (1) to (6), wherein the foam molding resin composition contains 97% by mass or more and less than 99.85% by mass of the fluororesin (A).

The disclosure (8) relates to the foam molding resin composition according to any one of the disclosures (1) to (7), wherein the foam molding resin composition contains substantially no low molecular weight fluorocompound.

The disclosure (9) relates to the foam molding resin composition according to any one of the disclosures (1) to (8), wherein the cyclic tetrapyrrole compound (B) has a phthalocyanine skeleton.

The disclosure (10) relates to the foam molding resin composition according to any one of the disclosures (1) to (9), wherein the cyclic tetrapyrrole compound (B) is a metal phthalocyanine.

The disclosure (11) relates to the foam molding resin composition according to any one of the disclosures (1) to (10), wherein the cyclic tetrapyrrole compound (B) is copper phthalocyanine.

The disclosure (12) relates to the foam molding resin composition according to any one of the disclosures (1) to (11), wherein the foam molding resin composition contains 0.1 to 20 parts by mass of the cyclic tetrapyrrole compound (B) relative to 100 parts by mass of the fluororesin (A).

The disclosure (13) relates to the foam molding resin composition according to any one of the disclosures (1) to (12), wherein the foam molding resin composition contains 0.5 to 2.0 parts by mass of the cyclic tetrapyrrole compound (B) relative to 100 parts by mass of the fluororesin (A).

The disclosure (14) relates to a foam-molded article formed using the foam molding resin composition according to any one of the disclosures (1) to (13).

The disclosure (15) relates to a method for producing a foam-molded article, the method including foam molding the foam molding resin composition according to any one of the disclosures (1) to (13).

The disclosure (16) relates to a foam electric wire including: a conductor; and a foam insulating layer on the conductor, the foam insulating layer being formed using the foam molding resin composition according to any one of the disclosures (1) to (13).

The disclosure (17) relates to a method for producing a foam electric wire, the method including forming a foam insulating layer on a conductor using the foam molding resin composition according to any one of the disclosures (1) to (13).

- Advantageous Effects of Invention

The disclosure can provide a foam molding resin composition capable of forming sufficiently fine cells and providing a good appearance, a foam-molded article, a method for producing a foam-molded article, a foam electric wire, and a method for producing a foam electric wire.

DESCRIPTION OF EMBODIMENTS

The disclosure is specifically described hereinafter.

The foam molding resin composition of the disclosure contains a fluororesin (A) and a cyclic tetrapyrrole compound (B).

In the foam molding resin composition of the disclosure, the cyclic tetrapyrrole compound (B) functions as a foam nucleating agent, enabling the formation of fine cells compared to the use of boron nitride. This allows the foam molding resin composition of the disclosure to be applied to uses requiring thin molded articles such as thin electric wires.

Compared to the use of fluorine-based surfactants, the composition can suppress the occurrence of sparks and decrease appearance defects. This allows for long-duration molding such as wire molding.

Furthermore, the composition can not only suppress the occurrence of sparks but also reduce surface roughness, thus resulting in excellent electrical properties.

The fluororesin (A) may be a resin containing fluorine and is preferably a melt-moldable fluororesin. Examples of the melt-fabricable fluororesin include tetrafluoroethylene (TFE)/hexafluoropropylene (HFP) copolymers (FEP), TFE/-perfluoro(alkyl vinyl ether) (PAVE) copolymers (PFA), TFE/ethylene copolymers (ETFE), chlorotrifluoroethylene (CTFE)/ethylene copolymers (ECTFE), polyvinylidene fluoride (PVdF), polychlorotrifluoroethylene (PCTFE), TFE/vinylidene fluoride (VdF) copolymers (VT), polyvinyl fluoride (PVF), TFE/VdF/CTFE copolymers (VTC), TFE/ethylene/HFP copolymers, and TFE/HFP/VdF copolymers. One of them may be used alone or two or more of them may be used in combination.

Examples of the PAVE include perfluoro(methyl vinyl ether) (PMVE), perfluoro(ethyl vinyl ether) (PEVE), and perfluoro(propyl vinyl ether) (PPVE). PPVE is preferred. One of them may be used alone or two or more of them may be used in combination.

The fluororesin (A) may have an additional polymerized unit derived from another monomer in an amount that causes no deterioration in the essential properties of the respective fluororesins. Such an additional monomer can appropriately be selected from TFE, HFP, ethylene, propylene, perfluoro(alkyl vinyl ethers), perfluoroalkylethylenes, hydrofluoroolefins, fluoroalkylethylenes, perfluoro(alkyl allyl ethers), and the like. One of them may be used alone or two or more of them may be used in combination. Such a perfluoroalkyl group in the additional monomer preferably has 1 to 10 carbon atoms.

The additional monomer may be a monomer having a polar group. Examples of the monomer having a polar group include non-fluorinated monomers having a hydroxyl group such as hydroxyalkyl vinyl ethers including, for example, hydroxyethyl vinyl ether, hydroxypropyl vinyl ether, hydroxybutyl vinyl ether, hydroxyisobutyl vinyl ether, and hydroxycyclohexyl vinyl ether; non-fluorinated monomers having a carboxyl group such as acrylic acid, methacrylic acid, itaconic acid, succinic acid, fumaric acid, crotonic acid, maleic acid, citraconic acid, undecylenic acid, and acetylenedicarboxylic acid; non-fluorinated monomers having an acid anhydride residue such as itaconic anhydride (hereinafter also referred to as "IAH"), citraconic anhydride (hereinafter also referred to as "CAH"), 5-norbornene-2,3-dicarboxylic anhydride (hereinafter also referred to as "NAH"), succinic anhydride, fumaric anhydride, and maleic anhydride; non-fluorinated monomers having a sulfo group such as vinylsulfonic acid; non-fluorinated monomers having an epoxy group (glycidyl group) such as glycidyl vinyl ether and glycidyl allyl ether; non-fluorinated monomers having an amino group such as aminoalkyl vinyl ether and aminoalkyl allyl ether; non-fluorinated monomers having an amide group such as (meth) acrylamide and methylolacrylamide; non-fluorinated monomers having a nitrile group such as acrylonitrile and methacrylonitrile.

Because of their excellent heat resistance, the fluororesin (A) is preferably at least one selected from the group consisting of TFE/HFP copolymers and TFE/PAVE copolymers, and is more preferably a TFE/HFP copolymer. Because of its more excellent electrical properties, the fluororesin (A) is also preferably a perfluororesin.

The TFE/HFP copolymer preferably satisfies a TFE/HFP mass ratio of 80 to 97/3 to 20, more preferably 84 to 92/8 to 16.

The TFE/HFP copolymer may be a copolymer consisting of TFE and HFP, or may be a terpolymer consisting of TFE, HFP, and a comonomer copolymerizable with TFE and HFP (e.g., a TFE/HFP/PAVE copolymer).

The TFE/HFP copolymer is also preferably a TFE/HFP/PAVE copolymer including a polymerized unit derived from PAVE.

The TFE/HFP/PAVE copolymer preferably satisfies a TFE/HFP/PAVE mass ratio of 70 to 97/3 to 20/0.1 to 10, more preferably 81 to 92/5 to 16/0.3 to 5.

The TFE/PAVE copolymer preferably satisfies a TFE/PAVE mass ratio of 90 to 99/1 to 10, more preferably 92 to 97/3 to 8.

The TFE/ethylene copolymer preferably satisfies a TFE/ethylene mole ratio of 20 to 80/20 to 80, more preferably 40 to 65/35 to 60. The TFE/ethylene copolymer may include another monomer component.

In other words, the TFE/ethylene copolymer may be a copolymer consisting of TFE and ethylene, or may be a terpolymer consisting of TFE, ethylene, and a comonomer copolymerizable with TFE and ethylene (e.g., a TFE/ethylene/HFP copolymer).

The TFE/ethylene copolymer may also preferably be a TFE/ethylene/HFP copolymer including a polymerized unit derived from HFP. The TFE/ethylene/HFP copolymer preferably satisfies a TFE/ethylene/HFP mole ratio of 40 to 65/30 to 60/0.5 to 20, more preferably 40 to 65/30 to 60/0.5 to 10.

Here, the "melt-moldable" fluororesin preferably has a melt flow rate (MFR) of 1 to 100 g/10 min. The MFR of the fluororesin (A) is more preferably 5 to 70 g/10 min, still more preferably 10 to 60 g/10 min. In order to suppress the occurrence of sparks and increase the foaming ratio, the MFR is even more preferably 15 to 50 g/10 min, even more preferably 20 to 45 g/10 min, particularly preferably 30 to 45 g/10 min.

The MFR is a value determined in conformity with ASTM D1238 using a die having a diameter of 2.1 mm and a length of 8 mm at a temperature of 372°C and a load of 5 kg.

The fluororesin (A) may include a non-melt-moldable fluororesin together with the melt-moldable fluororesin. When the fluororesin (A) includes the non-melt-moldable fluororesin, it preferably contains 0.001 to 3.0% by mass of the non-melt-moldable fluororesin relative to the total amount of the fluororesin (A).

"Non-melt-moldable" herein means that the MFR is lower than 1 g/10 min. The MFR is preferably 0.1 g/10 min or lower.

Example of the non-melt-moldable fluororesin includes polytetrafluoroethylene (PTFE). The FEP, PFA, ETFE, PCTFE, and PVDF as examples of the melt-moldable fluororesin are also usable. One of them may be used alone or two or more of them may be used in combination. Preferred is the PTFE among them.

The FEP and the like are considered to be non-melt-moldable fluororesins when the MFR is less than 1 g/10 min, whereas they are considered to be melt-moldable fluororesins when the MFR is 1 g/10 min or higher.

In the disclosure, the PTFE may be a homopolymer of tetrafluoroethylene (TFE) or may be modified polytetrafluoroethylene (modified PTFE) obtained from TEF and a trace comonomer.

The TFE homopolymer can be obtained by polymerization of only tetrafluoroethylene (TFE) as a monomer. The trace comonomer in the modified PTFE may be any fluorine-containing compound that is copolymerizable with the TFE. Examples thereof include perfluoroolefins such as hexafluoropropylene (HFP); perfluorovinyl ethers (PFVEs) such as various PAVEs described above; fluorodioxole; trifluoroethylene; and vinylidene fluoride.

In the modified PTFE, usually, the percentage of the trace monomer units derived from the trace monomer is 0.001 to 1.0% by mass of all the monomer units.

Herein, "the percentage (% by mass) of the trace monomer units of all the monomer units" means the mass fraction (mass%) of the trace monomer from which the trace monomer units are derived in the total amount of the monomers from which "all the monomer units" are derived, i.e., the monomers constituting the fluorine-containing polymer.

From the perspectives of heat resistance and electrical properties, the PTFE preferably has a standard specific gravity (SSG) of 2.15 to 2.30, more preferably 2.25 or lower, still more preferably 2.22 or lower.

Though a high molecular weight PTFE having a SSG of lower than 2.15 still exhibits the effects of the disclosure, it is hard to produce and thus impractical.

The SSG is determined by the immersion method in conformity with ASTM D4895-89.

The PTFE having a low SSG can exhibit the effect of increasing biaxial elongational viscosity with a small amount thereof. The PTFE having a high SSG needs a larger amount to exhibit such an effect.

The PTFE can be synthesized by known methods such as emulsion polymerization and suspension polymerization. The polymerization method is preferably emulsion polymerization.

In the case where the foam molding resin composition of the disclosure contains agglomerates of the PTFE, frequent spark-outs occur while molding an electric wire coating, which may cause a higher defect rate. Thus, the PTFE preferably has an average primary particle size of 50 to 800 nm, more preferably 50 to 500 nm.

The average primary particle size of the PTFE is determined as follows: measuring the Feret diameters of the PTFE in a transmission electron microscope image to determine the number-based length average primary particle size; diluting polymer latex with water to a solid content of 0.22% by mass; measuring the transmittance of 500-nm light relative to the unit length of the diluted latex; based on these values, obtaining a calibration curve, by which the average primary particle size of the PTFE is determined.

The fluororesin (A) can be synthesized by polymerizing monomer components through a usual polymerization method, such as emulsion polymerization, suspension polymerization, solution polymerization, bulk polymerization, or gas phase polymerization. In the polymerization reaction, a chain transfer agent such as methanol may be used in some cases. The fluororesin (A) may be produced by polymerization and isolation without a metal-ion-containing reagent.

The fluororesin (A) is not limited, but it may have an end group such as $-CF_3$ or $-CF_2H$ on at least one of the polymer main chain or a side chain. The fluororesin (A) preferably has a $-CF_3$ end group. The fluororesin having these end groups is obtainable by fluorination.

Non-fluorinated fluororesins may have a thermally and electrically unstable end group (hereinafter, such an end group is also referred to as an "unstable end group") such as $-COOH$, $-CH_2OH$, $-COF$, and $-CONH_2$. These unstable end groups can be reduced by the fluorination. The fluororesin (A) preferably includes a small number of unstable end groups or no such groups. More preferably, the total number of the above-exemplified four species of unstable end groups and $-CF_2H$ end groups is 50 or less per $1 \times 10^6$ carbon atoms. More than 50 unstable end groups may cause molding defects. The number of unstable end groups is more preferably 20 or less, still more preferably 10 or less.

The number of unstable end groups herein is a value determined by infrared absorption spectrometry. The fluororesin (A) may have neither unstable end groups nor $-CF_2H$ end groups, and all the end groups therein may be $-CF_3$ end groups.

The fluorination can be achieved by bringing a non-fluorinated fluororesin into contact with a fluorine-containing compound.

The fluorine-containing compound may be any such compound, and examples thereof include fluorine radical sources that generate fluorine radicals under the fluorination conditions. Examples of the fluorine radical source include $F_2$ gas, $CoF_3$, $AgF_2$, $UF_6$, $OF_2$, $N_2F_2$, $CF_3OF$, and halogen fluorides (e.g., $IF_5$, $ClF_3$). One of them may be used alone or two or more of them may be used in combination.

The concentration of the fluorine radical source such as $F_2$ gas may be 100%. However, the fluorine radical source is preferably diluted with an inert gas to 5 to 50% by mass, more preferably 15 to 30% by mass. Examples of the inert gas include nitrogen gas, helium gas, and argon gas. In order to save the cost, nitrogen gas is preferred.

The fluorination can be performed under any conditions. A molten fluororesin may be brought into contact with a fluorine-containing compound. Still, the fluorination is usually performed at a temperature of not higher than the melting point of the fluororesin, preferably 20°C to 220°C, more preferably 100°C to 200°C. The fluorination is usually performed for 1 to 30 hours, preferably 5 to 20 hours.

The fluorination is preferably achieved by bringing a non-fluorinated fluororesin into contact with a fluorine gas ($F_2$ gas).

The fluororesin (A) is not limited. In order to obtain a foam-molded article having excellent heat resistance and a wide continuous use temperature range, the fluororesin (A) preferably has a melting point of 200°C or higher, a molding temperature of 250°C or higher, and a thermal decomposition temperature of 300°C or higher. Furthermore, the melting point is more preferably 250°C or higher, and preferably 320°C or lower. The molding temperature is more preferably 300°C or higher, and preferably 450°C or lower. The thermal decomposition temperature is more preferably 350°C or higher, still more preferably 400°C or higher. The upper limit of each the melting point, molding temperature, and thermal decomposition temperature is 600°C or lower.

Herein, the melting point is the temperature measured using a differential scanning calorimeter (DSC). The molding temperature is the generally recommended temperature for molding, at which the resin has fluidity and causes no resin deterioration such as coloration. The thermal decomposition temperature is the 1% weight loss temperature when the resin is heated at 10°C/min in the air by the thermogravimetric analysis (TG). It excludes weight loss due to volatilization of contained water or crystal water that occurs at 100°C to 200°C. The resin having "fluidity" means that it has a MFR of 0.0001 or higher at the temperature.

In order to reduce signal loss in communication cables, the fluororesin (A) preferably has a permittivity of 3.0 or lower, more preferably 2.5 or lower, still more preferably 2.3 or lower, most preferably 2.1 or lower. The lower limit thereof is 1.0 or higher. Similarly, the resin preferably has a dissipation factor of 0.01 or lower, more preferably 0.002 or lower, still more preferably 0.001 or lower, most preferably 0.0005 or lower. The lower limit thereof is 0.0001 or higher. The permittivity and dissipation factor of the fluororesin (A) are measured by a cavity resonator method at a frequency of 6 GHz.

The foam molding resin composition preferably contains 80% by mass or more of the fluororesin (A), more preferably 90% by mass or more, still more preferably 95% by mass or more, particularly preferably 97% by mass or more. The upper limit of the amount is preferably 99.99% by mass or less, more preferably 99.85% by mass or less, still more preferably less than 99.85% by mass.

The foam molding resin composition of the disclosure may contain a resin different from the fluororesin (A). Examples thereof include general-purpose resins such as polyethylene resin, polypropylene resin, vinyl chloride resin, and polystyrene resin; and engineering plastics such as nylon, polycarbonate, polyether ether ketone resin, polyphenylene sulfide resin, polyarylether ketone (PAEK), polyether ketone ketone (PEKK), polyether ketone (PEK), polyether ether ketone ketone (PEEKK), polyethersulfone (PES), liquid crystal polymer (LCP), polysulfone (PSF), amorphous polyarylate (PAR), polyethernitrile (PEN), thermoplastic polyimide (TPI), polyimide (PI), polyetherimide (PEI), and polyamide-imide (PAI). One of them may be used alone or two or more of them may be used in combination.

The foam molding resin composition preferably contains 10% by mass or less of the resin different from the fluororesin (A), more preferably 5% by mass or less, still more preferably 1% by mass or less. The lower limit of the amount is not limited, and it may be 0% by mass, for example.

The foam molding resin composition of the disclosure contains a cyclic tetrapyrrole compound (B) as a foam nucleating agent.

The cyclic tetrapyrrole compound (B) is classified into three types, or phthalocyanine, chlorin, and bacteriochlorin, based on its skeleton. The cyclic tetrapyrrole compound (B) can form a complex with metal. Examples of metal include copper, iron, and magnesium.

In order to function well as a foam nucleating agent, the cyclic tetrapyrrole compound (B) preferably has a phthalocyanine skeleton. The cyclic tetrapyrrole compound (B) is more preferably a metal phthalocyanine, still more preferably copper phthalocyanine.

At the molding temperature during foam molding, the cyclic tetrapyrrole compound (B) is preferably undecomposed, insoluble in the fluororesin (A) and unmelted. In other words, the cyclic tetrapyrrole compound (B) preferably remains solid in the foam molding resin composition of the disclosure during foam molding. This enables the compound to function sufficiently as a foam nucleating agent.

Whether the cyclic tetrapyrrole compound (B) satisfies this condition can be confirmed by observing whether the cyclic tetrapyrrole compound (B) remains solid when heated to the predetermined temperature using a polarization microscope with a hot stage.

The cyclic tetrapyrrole compound (B) preferably has a crystallite size of greater than 100 Å determined by X-ray diffractometry (XRD), more preferably greater than 140 Å, still more preferably greater than 200 Å. This allows for the formation of an optimal crystal lattice with less distortion, enhancing foam formation. The upper limit of the crystallite size is preferably 10,000 Å or smaller, more preferably 5,000 Å or smaller, still more preferably 1,000 Å or smaller.

The powder sample is measured by XRD under the following conditions:

XRD device: SmartLab, available from Rigaku Holdings Corporation
Measurement and analysis software: SmartLab Studio II
X-ray source: Cu K$\alpha$ with a wavelength of 1.54 Å
Diffraction angle (2$\Theta$): 5° to 90°

The crystallite size is calculated by the Scherrer equation with the largest half width of the obtained diffraction peak(s).

$$D = K \times \lambda/(\beta \times \cos\Theta) \cdot \cdot \cdot \text{Scherrer equation}$$

D: Crystallite size (Å)
K: Scherrer constant
$\lambda$: X-ray wavelength (Å)

β: Half width of diffraction peak (rad)
Θ: Half of the diffraction angle (rad)

Scherrer constant (K) = 0.94
X-ray wavelength (λ) = 1.5418

When the obtained diffraction spectrum has no diffraction peaks derived from a crystallite structure, the compound is determined to have no crystallite structure.

The cyclic tetrapyrrole compound (B) preferably has a volatilization amount at 330°C of 7.0% by mass or lower, more preferably 5.0% by mass or lower, still more preferably 3.0% by mass or lower, particularly preferably 1.0% by mass or lower. Such volatilization amounts can suppress the occurrence of residues (deposits) which cause molding defects, and thus allows for extended molding such as wire molding. The lower limit of the volatilization amount is not limited and may be 0% by mass.

Mass loss of a sample is measured after being kept at 330°C for one hour in an electric furnace to calculate the volatilization amount by the formula (Mass loss/Mass before keeping × 100).

In order to form more uniform cells, the cyclic tetrapyrrole compound (B) is preferably dispersed in the fluororesin (A) with a distance between centroids of 5.0 μm or less. The upper limit of the distance is more preferably 3.0 μm or less, still more preferably 2.0 μm or less. The lower limit thereof is preferably 0.01 μm or greater, more preferably 0.1 μm or greater, still more preferably 0.5 μm or greater.

In order to form more uniform cells, the cyclic tetrapyrrole compound (B) is preferably dispersed in the fluororesin (A) at a density of 15,000 particles/mm$^2$ or more. The lower limit of the density is more preferably 30,000 particles/mm$^2$ or more, still more preferably 120,000 particles/mm$^2$ or more. The upper limit thereof is preferably 10,000,000 particles/mm$^2$ or less, more preferably 5,000,000 particles/mm$^2$ or less, still more preferably 1,000,000 particles/mm$^2$ or less.

In order to form more uniform cells, the cyclic tetrapyrrole compound (B) is preferably dispersed in the fluororesin (A) with a particle size of 4.0 μm or less. The upper limit of the particle size is more preferably 3.0 μm or less, still more preferably 2.0 μm or less. The lower limit thereof is preferably 0.001 μm or greater, more preferably 0.01 μm or greater, still more preferably 0.1 μm or greater.

A cross-sectional image of a resin composition containing the fluororesin (A) and the cyclic tetrapyrrole compound (B) is taken using a laser microscope (shape analysis laser microscope (VK-X1000), available from Keyence Corporation) at a 150-fold magnification. Then, the image is subjected to image processing to determine dispersed states (distance between centroids, density, and particle size) of the cyclic tetrapyrrole compound (B) in the fluororesin (A). The particle size and distance between centroids are each calculated as an average of 100 particles.

The cyclic tetrapyrrole compound (B) preferably has a melting temperature (melting point) of 300°C or higher, more preferably 320°C or higher, still more preferably 350°C or higher. Within this range, the compound is unlikely to melt even at the molding temperature during foam molding and thus can sufficiently function as a foam nucleating agent. The upper limit of the melting temperature is not limited, but it is preferably 1,000°C or lower.

The cyclic tetrapyrrole compound (B) preferably has a thermal decomposition temperature of 270°C or higher, more preferably 320°C or higher, still more preferably 350°C or higher. Within this range, the compound is unlikely to decompose even at the molding temperature during foam molding. Therefore, the compound can reduce adverse effects (such as lower electric properties, cell rupture, and coating breakage during electric wire molding) caused by its decomposition. The upper limit of the thermal decomposition temperature is not limited, but it is preferably 1,000°C or lower.

The melting temperature (melting point) and thermal decomposition temperature of the cyclic tetrapyrrole compound (B) can be determined by the same method as mentioned for the fluororesin (A) above.

The foam molding resin composition of the disclosure preferably contains 0.1 parts by mass or more of the cyclic tetrapyrrole compound (B) relative to 100 parts by mass of the fluororesin (A), more preferably 0.3 parts by mass or more, still more preferably 0.5 parts by mass or more. The composition also preferably contains 20 parts by mass or less of the compound, more preferably 5.0 parts by mass or less, still more preferably 2.0 parts by mass or less. Too small an amount of the cyclic tetrapyrrole compound (B) may result in insufficient effects of its addition. Too large an amount thereof may increase production costs.

The foam molding resin composition of the disclosure may contain a foam nucleating agent other than the cyclic tetrapyrrole compound (B). Examples thereof include boron nitride, sodium 2,2'-methylenebis(4,6-di-t-butylphenyl) phosphate, fluorooctanesulfonic acid barium salts, bisphenol phosphoric diester barium salts, N,N'-dicyclohexyl-2,6-naphthalene dicarboxamide, sodium benzenephosphonate, 2,6-naphthalene dicarboxylic acid, 1,3:2,4-bis-O-(4-methylbenzylidene)-D-sorbitol, N,N'-dioctadecylisophthalamide, sodium benzoate, sodium bis(4-nitrophenyl) phosphate, triaminobenzene derivatives, 1,3,5-tris (2,2-dimethylpropionylamino)-benzene, pigment red 254, talc, binaphthyl phosphoric acid sodium salts, t-butyl-binaphthyl phosphoric acid barium salts, rosin metal salts, condensed phosphate ester. Other examples include sulfonic acid, sulfonic acid salts, phosphonic acid, phosphonic acid salts, zeolite, azodicarbonamide (ADCA), N,N'-dinitropentamethylenetetramine (DPT), 4,4'-oxybis benzenesulfonyl hydrazide (OBSH). One of them may be used alone or two or more of them may be used in combination.

The foam molding resin composition of the disclosure may further contain a polyatomic anion-containing inorganic salt in an amount that does not impair the effects of the disclosure.

Examples of the polyatomic anion-containing inorganic salt include those described in US 4,764,538 A.

The foam molding resin composition of the disclosure may contain a conventionally known filler in an amount that does not impair the effects of the disclosure.

Examples of the filler include graphite, carbon fiber, coke, silica, zinc oxide, magnesium oxide, magnesium sulfate, tin oxide, antimony oxide, calcium carbonate, magnesium carbonate, magnesium hydroxide, glass, talc, mica, mica, aluminum nitride, calcium phosphate, sericite, diatomite, silicon nitride, fine silica, fumed silica, alumina, zirconia, quartz powder, kaolin, bentonite, and titanium oxide. One of them may be used alone or two or more of them may be used in combination. The filler may be in any form. For example, the filler may be in the form of fibers, needles, columns, whiskers, flat plates, layers, scales, balloons, porous material, chopped fibers, powder, particles, beads, or the like. The filler is different from the boron nitride mentioned above for the foam nucleating agent.

The foam molding resin composition of the disclosure may further contain any other components such as additives. Examples of such components include fillers such as glass fiber, glass powder, asbestos fiber, cellulose fiber, and carbon fiber, reinforcing agents, stabilizers, lubricants, pigments, flame retarders, and other additives.

Too large an amount of the low molecular weight fluorocompound may plasticize resin in the molten state when molded, resulting in the occurrence of many sparks. Preferably, the foam molding resin composition of the disclosure substantially contains no low molecular weight fluorocompound.

Herein, "substantially contains no low molecular weight fluorocompound" means that the amount of the compound is 10 ppm by mass or less in the composition.

The low molecular weight fluorocompound can be any fluorocompound having a molecular weight of 1000 or less, for example. Specific examples of one include perfluoroalkyl acid or perfluorosulfonic acid. More specifically, examples include $C_8F_{17}COOH$ and salts thereof, $C_7F_{15}COOH$ and salts thereof, $C_6F_{13}COOH$ and salts thereof, $C_8F_{17}SO_3H$ and salts thereof, $C_6F_{13}SO_3H$ and salts thereof, $C_4F_9SO_3H$ and salts thereof, $C_8F_{17}CH_2CH_2\text{-}SO_3H$ and salts thereof, $C_6F_{13}CH_2CH_2\text{-}SO_3H$ and salts thereof, $C_8F_{17}CH_2CH_2OH$, and $C_6F_{13}CH_2CH_2OH$, still more specifically $\{F(CF_2)_6CH_2CH_2SO_3\}_2Ba$.

The amount of the low molecular weight fluorocompound can be determined by the following method: crushing samples by cryo-milling; dispersing the resulting powder in methanol, followed by extraction under ultrasonic irradiation at 60°C for two hours; and quantifying the extract using a liquid chromatograph-mass spectrometer (LC-MS/MS) to determine the amount of the low molecular weight fluorocompound.

The foam molding resin composition of the disclosure preferably has a melt flow rate (MFR) of 1 to 100 g/10 min. The MFR is more preferably 5 to 70 g/10 min, still more preferably 10 to 60 g/10 min. In order to suppress the occurrence of sparks and increase the foam content, the MFR is further preferably 15 to 50 g/10 min, even more preferably 20 to 45 g/10 min, particularly preferably 30 to 45 g/10 min.

The MFR is a value determined in conformity with ASTM D1238 using a die having a diameter of 2.1 mm and a length of 8 mm at a load of 5 kg and a temperature of 372°C.

In order to reduce signal loss in communication cables, the foam molding resin composition of the disclosure preferably has a permittivity of 3.0 or lower, more preferably 2.5 or lower, still more preferably 2.3 or lower, most preferably 2.1 or lower. The lower limit thereof is 1.0 or higher. Similarly, the composition preferably has a dissipation factor of 0.01 or lower, more preferably 0.002 or lower, still more preferably 0.001 or lower, most preferably 0.0005 or lower. The lower limit thereof is 0.0001 or higher.

The permittivity and the dissipation factor of the foam molding resin composition of the disclosure are measured using the resin composition before foam molding by a cavity resonator method at a frequency of 6 GHz.

The foam molding resin composition of the disclosure can suitably be used as a foamable composition. Especially, the composition can be suitably used as a composition for forming covering layers of electric wires.

A method for producing a foam-molded article of the disclosure includes foam molding the foam molding resin composition of the disclosure.

A foam-molded article of the disclosure is formed using the foam molding resin composition of the disclosure.

The foam molding resin composition of the disclosure can be foam-molded by any conventionally known method. For example, the foam molding resin composition of the disclosure is charged into a screw extruder designed for foaming operations, and then a continuous gas extrusion method is performed.

Examples of the gas used in the gas extrusion method include gases of chlorodifluoromethane, nitrogen, and carbon dioxide, and any mixtures of these gases. The gas in the form of a pressurized gas may be introduced into the molten resin in the extruder, or the gas may be generated by mingling a chemical foaming agent into the molten resin. The introduced gas dissolves in the molten resin in the extruder.

When the molten material is extruded through an extrusion die, the gas dissolved in the resin is released from the molten material in response to this rapid decrease of pressure. The material extruded through the extruder is then, for example, put into water to be cooled down and solidified.

The foam-molded article of the disclosure has a low permittivity, a stable capacitance, and a light weight, thus it can provide a covering material to be mentioned later having stable dimensions such as the wire diameter and the thickness.

The total volume of the cells in the foam-molded article of the disclosure can appropriately be adjusted so as to fit the use thereof by, for example, adjusting the amount of gas introduced into the extruder or selecting the type of gas to be dissolved.

The foam-molded article of the disclosure can be produced as a molded material extruded through the extruder so as to have a shape that fits the use thereof. The molding method can be any heat melt molding, and examples thereof include extrusion foam molding, injection foam molding, and mold foam molding.

The foam-molded article of the disclosure can have any shape. For example, it can be formed into any of various shapes, including the covering materials such as foamed electric wires; filament-like shapes such as the shapes of wire rods; sheet-like shapes; film-like shapes; rod-like shapes; and pipe-like shapes. Examples of the use of the foam-molded article include electrical insulating materials; heat insulating materials; sound insulating materials; light-weight structural materials such as floating materials; and cushioning materials such as cushions. The foam-molded article can particularly suitably be used as a covering material for foamed electric wires.

Preferably, the resulting foam-molded article contains a melt-solidified matter of the foam molding resin composition of the disclosure and cells, and the cells are uniformly distributed in the melt-solidified matter. The cells may have any cell size, and the cell size is preferably 60 $\mu$m or smaller, more preferably 30 $\mu$m or smaller, for example. The cell size is also preferably 0.1 $\mu$m or greater.

The foam-molded article may have any foam content, and the ratio is preferably 20% or higher. The upper limit of the foam content may be, although not limited to, 80%.

A cell in the foam-molded article of the disclosure may be either an open cell or closed cell, with the latter being preferred. The closed cell is excellent in terms of rebound force against external pressure, rigidity, shock absorption, and processability. The closed cell also advantageously prevents inflow of moisture into the cell.

The closed cell can be formed by any conventionally known method in addition to the aforementioned heat melt molding.

Since the foam-molded article of the disclosure has a foamed state advantageous in reducing permittivity, it can be used as correlated insulators such as insulating layers for electric wires, semiconductor package substrates, transformers, circuit boards, motors, reactors, transistors, printed circuit boards, semiconductor devices, and electric parts. Especially, the foam-molded article can be suitably insulating layers (covering layers) for electric wires.

A method for producing a foam electric wire of the disclosure includes forming a foam insulating layer (covering layer) on a conductor using the foam molding resin composition of the disclosure.

A foam electric wire of the disclosure includes a conductor and a foam insulating layer (covering layer) on the conductor, the foam insulating layer being formed using the foam molding resin composition of the disclosure.

The method for forming the foam insulating layer (covering layer) on a conductor using the foam molding resin composition of the disclosure may be any method. For example, the fluororesin in the molten state (molten resin) is charged together with a soluble gas into a screw extruder designed for foaming operations, and then a continuous gas injection method is performed. The gas may be the same gas used in the method for producing a foam-molded article.

The foam electric wire of the disclosure includes the foam insulating layer having a foamed state advantageous in reducing permittivity, and thus, it can reduce signal attenuation more than conventional wires.

The material of the conductor (core) can be a conductive metal material such as copper and aluminum or carbon, for example. It may consist of a single material or may be nickel plated or silver plated on the surface.

The conductor is preferably 0.02 to 3 mm in diameter. The diameter of the conductor is more preferably 0.04 mm or greater, still more preferably 0.05 mm or greater, particularly preferably 0.1 mm or greater. The diameter of the conductor is more preferably 2 mm or smaller. The conductor may be a single wire or a stranded wire of a plurality of conductors.

The conductor may have any shape and may be flat or rectangular.

Specific examples of the conductor (core) include those satisfying AWG-46 (40-$\mu$m-diameter solid copper wires), those satisfying AWG-42 (64-$\mu$m-diameter solid copper wires), those satisfying AWG-36 (127-$\mu$m-diameter solid copper wires, stranded wires of seven 51-$\mu$m-diameter copper wires with a total diameter of 153 $\mu$m), those satisfying AWG-30 (254-$\mu$m-diameter solid copper wires, stranded wires of seven 102-$\mu$m-diameter copper wires with a total diameter of 306 $\mu$m), those satisfying AWG-27 (361-$\mu$m-diameter solid copper wires), those satisfying AWG-26 (404-$\mu$m-diameter solid copper wires), those satisfying AWG-24 (510-$\mu$m-diameter solid copper wires), and those satisfying AWG-22 (635-$\mu$m-diameter solid copper wires); here, AWG represents the American wire gauge.

The foam insulating layer (covering layer) is preferably 0.01 to 3.0 mm in thickness and is also preferably 2.0 mm or smaller in thickness.

The foam insulating layer (covering layer) preferably has a surface roughness of 9.0 $\mu$m or lower, more preferably 8.0 µm or lower, still more preferably 7.0 µm or lower. The lower limit thereof is not limited, but is generally 1.0 µm or higher.

The surface roughness is a value obtained as follows: measuring the surface of a foam electric wire using a laser microscope (VK-X1000, available from Keyence Corporation); performing the surface shape correction on the obtained image data by the quadratic surface correction, with the electric wire area designated; then determining the surface roughness over a $500 \times 2000$ µm area.

The number of sparks in the foam insulating layer (covering layer) is preferably 200 sparks/$10^4$ m or less, more preferably 80 sparks/$10^4$ m or less, still more preferably 30 sparks/$10^4$ m or less. The lower limit thereof is not limited and may be 0 spark/$10^4$ m or less.

The number of sparks is measured using a Sparktester HFS1220 (available from Beta LaserMike) at a voltage of 1500 V.

The foam electric wire of the disclosure can be used for cables for connecting computers and peripherals, cables for communicating high capacity video and audio at high speed, and cables for connecting servers in data centers, such as LAN cables, USB cables, Lightning cables, Thunderbolt cables, CATV cables, HDMI® cables, QSFP cables, aerospace wires, underground power cables, submarine power cables, high-voltage cables, superconducting cables, wrapping wires, wires for automobiles, wire harnesses/electrical components, wires for robots/FA, wires for OA equipment, wires for information equipment (optical fiber cables, audio cables, etc.), internal wiring for communication base stations, large current internal wiring (inverters, power conditioners, storage battery systems, etc.), internal wiring for electronic equipment, small electronic equipment/mobile wiring, wiring for moving parts, internal wiring for electrical equipment, internal wiring for measuring equipment, power cables (for construction, wind/solar power generation, etc.), cables for control/instrumentation wiring, and cables for motors.

The foam electric wire of the disclosure may have a double-layered (skin-foam) structure comprising a core, a covering material, and a non-foam layer disposed therebetween, a double-layered (foam-skin) structure comprising a non-foam layer that covers the peripheral layer of the wire, or a triple-layered (skin-foam-skin) structure comprising a non-foam layer that covers the peripheral layer of the skin-foam structure.

The non-foam layer may be any resin layer formed of a resin such as any of TFE/HFP copolymers, TFE/PAVE copolymers, TFE/ethylene copolymers, vinylidene fluoride polymers, polyolefin resins (e.g., polyethylene (PE)), and polyvinyl chloride (PVC).

It should be appreciated that a variety of modifications and changes in the structure and other details may be made to the aforementioned embodiments without departing from the spirit and scope of the claims.

EXAMPLES

The disclosure is described in more detail below with reference to examples, but is not limited to these examples.

The properties herein were determined by the following methods.

(Measurement of number of unstable end groups)

A pellet was rolled with a hydraulic press to prepare a film of approximately 0.3 mm thickness. The film was analyzed using a FT-IR Spectrometer 1760X (available from PerkinElmer).

A difference spectrum was obtained between the resulting spectrum and a base spectrum (spectrum where a sample was sufficiently fluorinated until no substantial difference could be observed anymore). The absorbance of each absorption peak was determined. The number of unstable end groups per $1 \times 10^6$ carbon atoms was calculated based on the following formula.

$$\text{Number of unstable end groups per } 1 \times 10^6 \text{ carbon atoms} = (I \times K)/t$$

(I: Absorbance, K: Correction coefficient, t: Thickness of film (mm))

The correction coefficient (K) of each unstable end group is described below.

- COF ($1884$ cm$^{-1}$) 405
- COOH ($1813$ cm$^{-1}$, $1775$ cm$^{-1}$) 455
- COOCH$_3$ ($1795$ cm$^{-1}$) 355
- CONH$_2$ ($3438$ cm$^{-1}$) 480
- CH$_2$OH ($3648$ cm$^{-1}$) 2325

(Measurement of number of -CF$_2$H end groups)

Measurement by $^{19}$F-NMR was performed using a nuclear magnetic resonance device AC300 (available from Bruker-Biospin) with the measurement temperature set at (melting point of fluororesin (A) + 20°C). The number was determined from integral value of the peak due to the presence of -CF$_2$H groups and integral values of other peaks.

(SSG)

The SSG was determined by the immersion method in conformity with ASTM D4895-89.

(Melting point)

The melting point was a temperature corresponding to the peak in the measurement using a DSC (RDC220, available from Seiko Instruments Inc.) at a temperature-increasing rate of 10°C/min.

(Thermal decomposition temperature)

The 1% weight loss temperature when heated at 10°C/min in the air by TG was measured.

(MFR)

The MFR was a value determined in conformity with ASTM D1238 using a KAYENESS Series 4000 melt indexer (YASUDA SEIKI SEISAKUSHO, LTD.) and a die having a diameter of 2.1 mm and a length of 8 mm at a temperature of 372°C and a load of 5 kg.
The examples and the comparative examples were performed by the following methods.

(Preparation of FEP pellet)

A fluorinated FEP pellet was prepared by the same method as described in Example 1 in JP 2017-128119 A. The obtained pellet (TFE/HFP/PPVE copolymer) had a mass ratio of TFE/HFP/PPVE of 87.9/11.1/1.0, a melting point of 261°C, an MFR of 38 g/10 min, and a total number of the unstable end groups and -CF$_2$H end groups of 0 per $1 \times 10^6$ carbon atoms.

(Preparation of premixed pellet for molding of electric wire (Step 1))

FEP pellets (MFR: 38 g/10 min) and an additive were kneaded using a twinscrew extruder, with temperatures of its cylinders and die each set as shown in Table 1, to prepare a masterbatch pellet. The concentration of the additive in the masterbatch pellet was about two to five times that in the premixed pellet.
The obtained masterbatch pellet and FEP pellet were kneaded using a kneader to prepare a premixed pellet having the target concentration of the additive.

[Table 1]

| Temperature of extruder | |
|---|---|
| C1 | 290°C |
| C2 | 300°C |
| C3 | 300°C |
| Die | 300°C |

(Evaluation of molding of foam electric wire (Step 2))

A foam molding extruder included an extruder and a system (each available from Hijiri Manufacturing Ltd.), a gas injection nozzle (available from Micodia), and a cross head (available from Unitek JAPAN K.K.). Table 2 shows the structure and the conditions of the extruder. Table 3 shows the temperatures of the extruder.
Nitrogen gas as a foaming agent was introduced into the melt-kneading portion of the foam molding extruder. Then the premixed pellet (composition) produced as described above was charged into the extruder to perform extrusion foam molding. The foam-molded article was applied to the surface of a φ0.30-mm core wire to cover, achieving an outer diameter of 0.80 mm and a capacitance of 86 pf/m. Thereby, a foam electric wire was produced.

The outer diameter of the wire was measured using a LASER MICRO DIAMETER LDM-303H-XY (available from Takikawa Engineering Co., Ltd.). The capacitance was measured using a CAPAC300 19C (available from Zumbach Electronic AG).

[Table 2]

| Conditions of extruder | |
|---|---|
| Extruder size | Φ35 mm |
| Die size | 2.5 mm |
| Tip size | 1.0 mm |
| Screw rotation speed | 10-20 rpm |
| Pressure of nitrogen gas | 15-30 MPa |
| Flow rate of nitrogen gas | 10-30 cc/min |

[Table 3]

| Temperature of extruder | |
|---|---|
| C1 | 280-330°C |
| C2 | 300-360°C |
| C3 | 330-380°C |
| C4 | 330-380°C |
| C5 | 330-380°C |
| H1 | 330-375°C |
| H2 | 300-365°C |
| H3 | 280-360°C |

(Cell size)

A SEM cross-sectional image of the foam electric wire was taken. The equivalent circle diameter of each cell was determined by processing the image. 100 equivalent circle diameters were averaged to determine the cell size.

(Foaming ratio)

The foaming ratio was determined by [{(specific gravity of fluororesin) - (specific gravity of foam-molded article)}/(specific gravity of fluororesin)] × 100.

(Smoke)

The top of the resin discharge opening of the extruder die was visually observed to determine the presence or absence of a volatile component.

(Residues)

The presence or absence of deposits at the resin discharge opening of the extruder die was visually confirmed.

(Surface condition)

The degree of irregularities (bumps) perceived when touching the surface of the foam electric wire was evaluated under the following criteria.

Excellent: No irregularities
Good: Few irregularities
Fair: Some irregularities
Poor: Many irregularities

(Surface roughness)

The surface roughness of the foam electric wire was measured using a laser microscope (VK-X1000, available from Keyence Corporation). After the surface shape correction on the obtained image data was performed by the quadratic surface correction, with the electric wire area designated, a surface roughness was determined over a $500 \times 2000$ $\mu$m area.

(Number of sparks)

The number of sparks per $10^4$ m was measured using a Sparktester HFS1220 (available from Beta LaserMike) at a voltage of 1500 V.

(Amount of low molecular weight fluorocompound)

A sample was crushed by cryo-milling. The resulting powder was dispersed in methanol, followed by extraction under ultrasonic irradiation at 60°C for two hours. The extract was quantified using a liquid chromatograph-mass spectrometer (LC-MS/MS) to determine the amount of the low molecular weight fluorocompound.

(Permittivity and dissipation factor)

The permittivity and the dissipation factor of the premixed pellet (resin composition before form-molding) having target additive concentration were measured by a cavity resonator method at a frequency of 6 GHz.

(State of cyclic tetrapyrrole compound (B) at molding temperature)

Using a polarization microscope with a hot stage, the cyclic tetrapyrrole compound (B) was observed to see whether it remains solid when heated to the predetermined temperature.

Example 1

According to Step 1, a pellet was prepared by adding 1 part by mass of copper phthalocyanine (melting point: no peak(s) observed at 350°C or lower, thermal decomposition temperature: 388°C, available from Tokyo Chemical Industry Co., Ltd.) relative to 100 parts by mass of FEP pellet. According to Step 2, foam molding of electric wire was performed at an extrusion speed (screw rotation speed) of 15 rpm, a flow rate of nitrogen gas of 16 cc/min, and a haul-off speed of 100 m/min to obtain a foam electric wire having an outer diameter of 0.80 mm and a capacitance of 86 pF/m.
Neither smoke nor residues were observed during molding. The number of sparks was impressively low at 5 sparks/$10^4$ m. The analysis of the obtained foam electric wire demonstrates a favorable foaming ratio of 43%, a favorable cell size of 21 $\mu$m and a highly favorable surface roughness of 6.8 $\mu$m. The tactile surface condition was also found to be extremely smooth.
At the molding temperature during foam molding, the copper phthalocyanine was undecomposed, insoluble in FEP and unmelted.
Furthermore, no low molecular weight fluorocompounds were detected in the pellet used or in the covering layer of the foam electric wire prepared. The same was true for the comparative examples described below.
A SEM image used to calculate the cell size confirmed the formation of closed cells. The same was true for the Comparative Examples 1, 3, and 4 described below.

Comparative Example 1

A foam electric wire was prepared by the same method as in Example 1 except that boron nitride (MGP, available from Denka Company Limited) was used as an additive.
Neither smoke nor residues were observed during molding. However, the surface of the electric wire was in poor condition and the number of sparks was extremely high at 300 sparks/$10^4$ m or more. The analysis of the obtained foam electric wire demonstrates a large cell size of 36 $\mu$m and an extremely high surface roughness of 12.4 $\mu$m.

Comparative Example 2

A foam electric wire was prepared by the same method as in Example 1 except that Irgaclear XT386 (transparent nucleating agent for polypropylene, available from BASF) was used as an additive. However, the frequent occurrence of smoke and residues prevented the formation of an intended foam electric wire.

Comparative Example 3

A foam electric wire was prepared by the same method as in Example 1 except that 0.5 parts by mass of potassium titanate (TISMO D, available from Otsuka Chemical Co., Ltd.) was used as an additive.
Neither smoke nor residues were observed during molding. However, the surface of the electric wire was in fair condition and the number of sparks was extremely high at 100 sparks/$10^4$ m or more. The analysis of the obtained foam electric wire demonstrates a favorable cell size of 27 $\mu$m but a high surface roughness of 10.1 $\mu$m.

Comparative Example 4

A foam electric wire was prepared by the same method as in Example 1 except that it was additive-free.
Neither smoke nor residues were observed during molding. The number of sparks was also favorable at 0 spark/$10^4$ m. However, the analysis of the obtained foam electric wire demonstrates an excessively large cell size of 103 $\mu$m.

Comparative Example 5

A foam electric wire was prepared by the same method as in Example 1 except that 0.01 parts by mass of sodium fluorobutanesulfonate (fluorine-based surfactant) and 0.4 parts by mass of boron nitride were used as additives.
Neither smoke nor residues were observed during molding. However, the surface of the electric wire was in poor condition and the number of sparks was high at 100 sparks/$10^4$ m or more. The analysis of the obtained foam electric wire demonstrates a favorable cell size of 30 $\mu$m but an extremely high surface roughness of 12.3 $\mu$m.

[Table 4]

| | Additive | Foamability | | Moldability | | | | | Electric properties | |
|---|---|---|---|---|---|---|---|---|---|---|
| | | Cell size | Foaming ratio | Smoke | Residues | Surface condition | Surface roughness | Number of sparks | Permittivity | Dissipation factor |
| | | μm | % | | | | μm | spark(s)/$10^4$ m | (6 GHz) | (6 GHz) |
| Example 1 | Copper phthalocyanine | 21 | 43 | Absent | Absent | Excellent | 6.8 | 5 | 2.0 | 0.0003 |
| Comparative Example 1 | Boron nitride | 36 | 43 | Absent | Absent | Poor | 12.4 | 300 or more | 2.0 | 0.0003 |
| Comparative Example 2 | Irgaclear XT386 | Unable to produce electric wire | | Present frequently | Present frequently | - | - | 300 or more | 2.0 | 0.0003 |
| Comparative Example 3 | Potassium titanate | 27 | 43 | Absent | Absent | Fair | 10.1 | 100 or more | 2.1 | 0.0007 |
| Comparative Example 4 | Additive-free | 103 | 10 or lower | Absent | Absent | Poor | - | 0 | 2.0 | 0.0003 |
| Comparative Example 5 | Sodium fluorobutanesulfonate + boron nitride | 30 | 43 | Absent | Absent | Poor | 12.3 | 100 or more | 2.0 | 0.0004 |

**Claims**

1. A foam molding resin composition comprising:

   a fluororesin (A); and
   a cyclic tetrapyrrole compound (B).

2. The foam molding resin composition according to claim 1,
   wherein the fluororesin (A) is a melt-moldable fluororesin.

3. The foam molding resin composition according to claim 1 or 2,
   wherein the fluororesin (A) includes at least one selected from the group consisting of a tetrafluoroethylene/hexafluoropropylene copolymer and a tetrafluoroethylene/perfluoro(alkyl vinyl ether) copolymer.

4. The foam molding resin composition according to any one of claims 1 to 3,
   wherein the fluororesin (A) is a tetrafluoroethylene/hexafluoropropylene copolymer.

5. The foam molding resin composition according to any one of claims 1 to 4,
   wherein the fluororesin (A) is fluorinated.

6. The foam molding resin composition according to any one of claims 1 to 5,
   wherein the foam molding resin composition contains 80 to 99.99% by mass of the fluororesin (A).

7. The foam molding resin composition according to any one of claims 1 to 6,
   wherein the foam molding resin composition contains 97% by mass or more and less than 99.85% by mass of the fluororesin (A).

8. The foam molding resin composition according to any one of claims 1 to 7,
   wherein the foam molding resin composition contains substantially no low molecular weight fluorocompound.

9. The foam molding resin composition according to any one of claims 1 to 8,
   wherein the cyclic tetrapyrrole compound (B) has a phthalocyanine skeleton.

10. The foam molding resin composition according to any one of claims 1 to 9,
    wherein the cyclic tetrapyrrole compound (B) is a metal phthalocyanine.

11. The foam molding resin composition according to any one of claims 1 to 10,
    wherein the cyclic tetrapyrrole compound (B) is copper phthalocyanine.

12. The foam molding resin composition according to any one of claims 1 to 11,
    wherein the foam molding resin composition contains 0.1 to 20 parts by mass of the cyclic tetrapyrrole compound (B) relative to 100 parts by mass of the fluororesin (A).

13. The foam molding resin composition according to any one of claims 1 to 12,
    wherein the foam molding resin composition contains 0.5 to 2.0 parts by mass of the cyclic tetrapyrrole compound (B) relative to 100 parts by mass of the fluororesin (A).

14. A foam-molded article formed using the foam molding resin composition according to any one of claims 1 to 13.

15. A method for producing a foam-molded article, the method comprising:
    foam molding the foam molding resin composition according to any one of claims 1 to 13.

16. A foam electric wire comprising:

    a conductor; and
    a foam insulating layer on the conductor,
    the foam insulating layer being formed using the foam molding resin composition according to any one of claims 1 to 13.

**17.** A method for producing a foam electric wire, the method comprising:
forming a foam insulating layer on a conductor using the foam molding resin composition according to any one of claims 1 to 13.

## INTERNATIONAL SEARCH REPORT

International application No.

**PCT/JP2025/007783**

### A. CLASSIFICATION OF SUBJECT MATTER

*C08J 9/04*(2006.01)i; *H01B 7/02*(2006.01)i; *H01B 13/14*(2006.01)i
FI:   C08J9/04 101; C08J9/04 CEW; H01B7/02 G; H01B13/14 B

According to International Patent Classification (IPC) or to both national classification and IPC

### B. FIELDS SEARCHED

Minimum documentation searched (classification system followed by classification symbols)

C08J9/00-9/42; C08L27/12-27/20; H01B7/02; H01B13/14

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-213894 A (DAIKIN INDUSTRIES, LTD.) 27 October 2011 (2011-10-27) claims 1, 5-6, 8, 11, paragraphs [0027], [0030]-[0048], [0055], [0087], [0099], [0102], [0106], [0121] | 1-4, 6-11, 14-17 |
| X | WO 2012/141154 A1 (ASAHI GLASS COMPANY, LIMITED) 18 October 2012 (2012-10-18) claims 1-2, paragraphs [0016]-[0018], [0024], [0033], [0038]-[0042], [0053] | 1, 3-4, 6-17 |
| Y | WO 2015/119053 A1 (DAIKIN INDUSTRIES, LTD.) 13 August 2015 (2015-08-13) claims 1, 9-10, paragraphs [0019]-[0021], [0033]-[0034], [0040]-[0042], [0049], [0056]-[0064] | 1-17 |
| Y | JP 10-251430 A (SANWA KAKO CO., LTD.) 22 September 1998 (1998-09-22) claim 1, paragraphs [0005]-[0006], [0010] | 1-17 |
| A | WO 03/000792 A1 (DAIKIN INDUSTRIES, LTD.) 03 January 2003 (2003-01-03) entire text | 1-17 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **16 May 2025** | **27 May 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2025/007783**

| Patent document cited in search report | | | Publication date (day/month/year) | Patent family member(s) | Publication date (day/month/year) |
|---|---|---|---|---|---|
| JP | 2011-213894 | A | 27 October 2011 | (Family: none) | |
| WO | 2012/141154 | A1 | 18 October 2012 | US 2014/0045959 A1 claims 1-2, paragraphs [0023]-[0033], [0048], [0064]-[0065], [0072]-[0084], [0106] CN 103492467 A | |
| WO | 2015/119053 | A1 | 13 August 2015 | US 2017/0008986 A1 claims 1, 9-10, paragraphs [0027]-[0032], [0069]-[0079], [0097]-[0102], [0117]-[0119], [0129]-[0141] EP 3091042 A1 CN 105980426 A | |
| JP | 10-251430 | A | 22 September 1998 | (Family: none) | |
| WO | 03/000792 | A1 | 03 January 2003 | US 2004/0198886 A1 entire text CN 1639254 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10045931 A
- JP 2022028640 A
- JP 2005206745 A

- US 4764538 A
- JP 2017128119 A